# EUROPEAN PATENT SPECIFICATION

(11) **EP 0 952 123 B1**
(45) Date of publication and mention of the grant of the patent: **11.02.2004**
(21) Application number: 99105130.1
(22) Date of filing: 26.03.1999
(51) Int. Cl.: C03C 3/087, C03C 4/02, C03C 4/08

(54) **Ultraviolet/infrared absorbent low transmittance glass**
Ultraviolett/Infrarot absorbierendes Glas mit niedriger Durchlässigkeit
Verre à faible transmission absorbant les rayonnements ultraviolets et infrarouges

(30) Priority: 13.04.1998 JP 10123398
(43) Date of publication of application: 27.10.1999
(73) Proprietor: NIPPON SHEET GLASS CO. LTD., Chuo-ku Osaka-shi Osaka-fu (JP)
(72) Inventor: Seto, Hiromitsu, Chuo-ku, Osaka-shi, Osaka (JP); Nagashima, Yukihito, Chuo-ku, Osaka-shi, Osaka (JP); Yoshii, Shigekazu, Chuo-ku, Osaka-shi, Osaka (JP)
(74) Representative: Albrecht, Thomas, Dr.

(56) References cited:
- EP-A- 0 803 479
- EP-A- 0 825 156
- EP-A- 0 842 906
- DE-A- 19 636 303
- US-A- 5 545 596

## Description

The present invention relates to an ultraviolet/infrared absorbent low transmittance glass. More particularly, it relates to an ultraviolet/infrared absorbent low transmittance glass which has a grayish green shade and which has low visible light transmittance, low solar energy transmittance, and low ultraviolet transmittance, so that it is useful for windows of vehicles or buildings particularly for a privacy protecting glass in a rear window of a vehicle.

Recently, a variety of glasses with ultraviolet/infrared absorptivity to be used as a vehicle windshield have been proposed with the view of preventing degradation of luxurious interior materials and reducing cooling load of the vehicle. In view of privacy protection, glass with relatively low visible light transmittance is preferably used for a rear window glass of a vehicle. Such kinds of glass include the followings.

For example, a dark gray colored infrared absorbent glass disclosed in Japanese Patent H7-29813B consists of soda-lime-silica glass including colorants consisting of 1.00 to 1.7 weight percent Fe₂O₃ (total iron), at least 0.27 weight percent FeO, 0.002 to 0.005 weight percent Se, and 0.01 to 0.02 weight percent CoO. The glass exhibits luminous transmittance less than 32 percent and total solar infrared transmittance less than 15 percent at 3.9 mm thickness.

A dark gray colored glass disclosed in Japanese Patent H8-157232A consists of soda-lime-silica glass including colorants consisting of 0.8 to 1.4 weight percent Fe₂O₃ (total iron), less than 0.21 weight percent FeO, 0.05 to 1.0 weight percent TiO₂, 0.02 to 0.05 weight percent CoO, and 0.0005 to 0.015 weight percent Se.

A neutral gray colored glass disclosed in claim 25 of U.S. Patent No. 5,393,593 consists of soda-lime-silica glass including colorants consisting of 1.00 to 2.2 weight percent Fe₂O₃ (total iron), at least 0.20 weight percent FeO, 0.0005 to 0.005 weight percent Se, and 0.010 to 0.030 weight percent CoO. The glass exhibits luminous transmittance less than 35 percent and total solar infrared transmittance less than 20 percent at 3.9 mm thickness.

A glass disclosed in PCT (Japanese phase) H7-508971 consists of soda-lime-silica glass including colorants consisting of 1.3 to 2.0 weight percent of Fe₂O₃ (total iron), about 0.01 to 0.05 weight percent of NiO, about 0.02 to 0.04 weight percent of Co₃O₄, about 0.0002 to 0.003 weight percent of Se and having a ferrous iron value of 18 to 30 weight percent and less than 0.53 of a light and shade coefficient.

In both the dark gray colored infrared absorbent glass disclosed in Japanese Patent H7-29813B and the neutral gray colored glass disclosed in U.S. Patent No. 5,393,593, a great quantity of Se is used for providing a desirable color. Such a great quantity of Se is unpreferable for the environment because Se has toxicity and is easy to vaporize. The above dark gray glass disclosed in Japanese Patent H8-157232A including 0.05 to 1.0 weight percent TiO₂ as an essential component is unpreferable because TiO₂ is expensive to increase the batch cost.

The aforementioned glass includes selenium in high concentration to provide optical properties, without essentially including nickel.

The glass disclosed in PCT (Japanese phase) H7-508971 is prepared from standard soda-lime-silica glass to which iron oxide, cobalt oxide, nickel oxide and selenium are added in a specific ratio. However, the glass composition disclosed therein has a great content of selenium and small of nickel oxide.

### OBJECT AND SUMMARY OF THE INVENTION

It is an object of the present invention to provide an ultraviolet/infrared absorbent low transmittance glass which has a grayish green shade and which has low visible light transmittance, low solar energy transmittance and low ultraviolet transmittance so that it is useful for a window of a vehicle or a building particularly for a privacy protecting glass of a rear window of a vehicle.

The ultraviolet/infrared absorbent low transmittance glass of the present invention consists of a base glass, that is, the major constituents comprising:
65 to 80 wt. % SiO₂;
0 to 5 wt. % Al₂O₃;
0 to 10 wt. % MgO;
5 to 15 wt. % CaO wherein a total amount of MgO and CaO is between 5 and 15 wt. %;
10 to 18 wt. % Na₂O;
0 to 5 wt. % K₂O wherein a total amount of Na₂O and K₂O is between 10 and 20 wt. %; and
0 to 5 wt. % B₂O₃,
and a colorant including:
more than 0.95 wt. % and less than 1.2 wt. % total iron oxide (T-Fe₂O₃) expressed as Fe₂O₃;
0.001 to 0.03 wt. % CoO;
0 to 0.0008 wt. % Se; and
0 to 0.2 % NiO.

The glass of the present invention contains undesirable Se in a smaller amount than the glass of the prior art or contains no Se, and the glass of the present invention contains nickel oxide as a colorant instead of Se. The glass of the present invention is preferable to be reinforced by blasting air cooling for a desired color shade.

### DETAILED DESCLIPTION OF PREFERRED EMBODIMENTS

The description will be made as regard to an ultraviolet/infrared absorbent low transmittance glass composition. It should be noted that components will be represented with percentage by weight.

SiO ₂(silica) is a principal component for forming skeleton of glass. Less than 65% SiO₂ lowers the durability of the glass and more than 80% SiO₂ raises the melting temperature of the glass so high.

Al₂O₃ is a component for improving the durability of the glass. More than 5% Al₂O₃ raises the melting temperature of the glass so high. The preferable range of Al₂O₃ is between 0.1% and 2%.

MgO and CaO improve the durability of the glass and adjust a devitrification temperature and viscosity of the glass during molding. More than 10% MgO raises the devitrification temperature. Less than 5% or more than 15% CaO raises the devitrification temperature of the glass. The durability of the glass is lowered when the total amount of MgO and CaO is less than 5%, while the devitrification temperature is increased when the total exceeds 15%.

Na₂O and K₂O prompt the glass to melt. The efficiency of promotion of melting becomes poor when Na₂O is less than 10% or the total of Na₂O and K₂O is less than 10%, while the durability of the glass is lowered when Na₂O exceeds 18% or the total of Na₂O and K₂O exceeds 20%. K₂O is preferable not to exceed 5% because of its expensive cost.

B₂O₃ is a component for improving the durability of the glass, prompting to melt, and yet enhancing the ultraviolet absorption. B₂O₃ should be less than 5%, since difficulties during molding are caused due to the vaporization of B₂O₃ when B₂O₃ exceeds 5%.

Iron oxide is present in the form of Fe₂O₃ and the form of FeO in the glass. Fe₂O₃ is a component for improving the ultraviolet absorptivity and FeO is a component for improving the heat rays absorptivity. The iron in the composition of the glass makes the glass green tint.

When the total amount of iron oxide (T-Fe₂O₃) expressed as Fe₂O₃ is less than 0.95%, the efficiency of ultraviolet and infrared absorptivity becomes small so as not to provide desired optical properties. On the other hand, when T-Fe₂O₃ exceeds 1.2%, it is difficult to obtain the desired grayish color shade because the large amount of iron makes the color too green tint.

When T-Fe₂O₃ is not greater than 1.1%, the iron in the composition gives an efficiency in coloring the glass green tint and improves the visible light transmittance, so that an allowance is made for adding the other colorant and adjusting the shade. T-Fe₂O₃ is therefore contained in an amount of exceeding 0.95% and less than 1.2%, preferably not more than 1.1 %.

Fe₂O₃ has a function of particularly increasing the absorptivity in ultraviolet range when glass is reinforced by air blast cooling. This means that the glass of this invention can obtain enough efficiency of ultraviolet absorptivity without using expensive ultraviolet absorbent such as CeO₂ and TiO₂. When T- Fe₂O₃ is in the range mentioned above, the desired color shade of the glass can be obtained after discoloration due to the reinforcement process by air blast cooling.

When the FeO/T-Fe₂O₃ ratio (a weight of FeO expressed as Fe₂O₃ against T-Fe₂O₃) is too low, the heat rays absorptivity can not be obtained sufficiently because of a small amount of FeO. Many bubbles are also formed in the molten glass because the molten glass is relatively oxidative so that the product yield is lowered. When the FeO/T-Fe₂O₃ ratio is too high, the visible light transmittance is reduced and the color is of a blue tint. In addition, nickel sulfide stones are sometimes present in the molten glass because the molten glass is relatively reductive. Too high ratio of FeO/T-Fe₂O₃ is also unpreferable since it causes streaks with enough silica and silica scum.

In the present invention, the FeO/T- Fe₂O₃ ratio in a range between 0.15 and 0.4 brings a green shade which is an almost neutral color having high ultraviolet absorptivity and high heat rays absorptivity. In this case, values expressed as Fe₂O₃ are used for the content of FeO.

CoO is a component for forming an almost neutral color such as greenish gray shade by cooperating with Se and/or NiO, and Fe₂O₃ for controlling the visible light transmittance. Less than 0.001% CoO can not form a desired color shade and makes the visible light transmittance too high. More than 0.03% CoO makes the color too blue tint and reduces the visible light transmittance. The contant of CoO is preferable to be in a range from 0.001% to 0.018%.

Se contributes a pink color, so that it reduces the excitation purity with the aid of a complementary color of CoO. When NiO is included, Se may not be always included. More than 0.0008% Se reduces the visible light transmittance. When using Se, the content thereof is preferable in a range from 0.0001% to 0.0008%, preferably in a range from 0.0001% to 0.0004%. As mentioned, the desired color shade can be obtained with a significantly smaller amount of Se than the amount conventionally required or without Se.

NiO is a component for controlling the visible light transmittance and for reducing the excitation purity as like as CoO. It should be understood that NiO may not be always included when Se is included. When NiO is more than 0.2%, nickel sulfide stones are sometimes present in the product and the visible light transmittance is reduced. In addition, the obtained shade becomes too greenish. When using NiO, the content thereof is preferably in a range between equal to or more than 0.003% and less than 0.05% for middle visible light transmittance, or in a range between 0.05% and 0.2% for low visible light transmittance.

When the concentration of NiO in the glass is too high, there is a possibility that NiO coagulates to form a nickel sulfide stones. However, when NiO is in the range define by this invention, the desired color shade can be obtained without producing the nickel sulfide stones.

It is known that the coordination number of NiO varies according to the rate of cooling glass so that the color of the glass varies. This is because the cooling varies the coordination number of oxide around Ni²⁺ from 6 into 4 and thus varies the optical absorption. The absorption of Ni²⁺ with octahedral coordination exists around 430 nanometers so as to contribute yellow to the glass, while the absorption of Ni²⁺ with tetrahedral coordination exists from 500 to 640 nanometers. Therefore, the excitation purity would be reduced to obtain the preferable shade by using Ni²⁺ with tetrahedral coordination. Windshields of passenger car are normally reinforced by air blast cooling for safety. The reinforcement process by air blast cooling for safety. The reinforcement process by air blast cooling also varies the coloring condition of NiO. In the present invention, the desired color shade can be obtained without adding Se by the discoloration due to the reinforcement process by air blast cooling.

CeO₂ is a component for improving the ultraviolet absorptivity and is present in the form of Ce³⁺ or in the form of Ce⁴⁺ in glass. Particularly, Ce³⁺ is effective in absorbing ultraviolet with less absorptivity in the visible range. In the present invention, oxide of Ce³⁺ is also expressed in terms of CeO₂ and is included in the total amount of CeO₂.

TiO₂ is a component for improving the ultraviolet absorptivity particularly by interaction with FeO. TiO₂ can be added to improve the ultraviolet absorptivity within such a range as not to lose the grayish green color shade, or to add a yellow tint in order to obtain the desired color shade. The use of expensive CeO₂, TiO₂ increases the cost so that it is not preferable to use more than 2% CeO₂, TiO₂.

One or more than two among MnO, V₂O₅, MoO₃, CuO, Cr₂O₃, and the like may be added as colorant and SnO₂ within a rang from 0% to 1% in total may be added as a reducing agent in such a range as not to lose middle transmittance and the grayish green shade. To further securely prevent the formation of nickel sulfide stones, ZnO may be added in a range from 0% to 1%.

In the present invention, the glass is preferable to be reinforced by the air blasting. The desired color shade and optical properties are obtained in the reinforced process when the glass has the composition of the present invention comprising NiO and Fe₂O₃ in the specific amount.

In the reinforcement process, the glass plate produced from the molten glass is reheated at 600 to 750°C for 2 to 5 minutes, and then, cooled by blasting air of 10 to 30°C at a cooling rate of 100 to 300°C/sec.

The air blasting reinforcement process makes the glass plate comprising NiO and Fe₂O₃ to have the greenish gray and almost neutral shade, and to have the low visible light transmittance and the low ultraviolet transmittance while keeping the high heat rays absorptivity.

In the present invention, when measured by using C.I.E standard illuminant "A", the glass with a thickness between 2 to 5 mm has a visible light transmittance (YA) in the range from 10% to 50%, a solar energy transmittance (TG) of not greater than 30% and a ultraviolet transmittance (Tuv) defined by ISO of not greater than 12%.

In case of using L* a* b* color system, the chromaticity, expressed as a* and b*, of the glass color are preferably in ranges of -8≦a*≦-2 and -2 ≦b*≦4, respectively.

When measured by using C.I.E. standard illuminant "C" over the wavelength range from 380 to 770 nanometers, the glass of the present invention preferably has optical properties with a dominant wavelength (λd) in the range from 480 to 580 nanometers and a excitation purity (Pe) of less than 9% in case the glass has a thickness of 4 mm.

Hereinafter, the mode of carrying out the present invention will be described referring to examples.

### Examples 1 through 10

Glass raw material is prepared by adding required composition consisting of ferric oxide, titanium oxide, cerium oxide, cobalt oxide, metallic selenium, and nickel oxide into a standard soda-lime-silica glass batch composition, also adding carbonaceous reducing agent (concretely, coke powder etc.) at a ratio of about 0.01 parts by weight per 100 parts of the glass raw material therein, and mixing them. The glass raw material thus prepared is heated and melted in an electric furnace at 1500°C for 4 hours. The molten glass is flowed onto a stainless plate and annealed to the room temperature to obtain a 6mm thick glass plate. After polishing the glass plate in such a manner that the thickness reduces to 4 mm, the glass plate is reinforced with reheating it at 700°C for 5 minutes and then cooling it with 20°C air blast at 3.2 to 2.1 kgf/mm² wind flow to become a sample. Each sample is measured in the visible light transmittance by the C.I.E. illuminant A (YA), the solar energy transmittance (TG), the ultraviolet transmittance by ISO 9050(Tuv), the dominant wavelength by the illuminant C(λd), and the excitation purity (Pe). And, L*, a* and b* is measured following C.I.E.L.A.B.

Tables 1 and 2 show base glass compositions of the obtained samples, T-Fe₂O₃ concentration, FeO (expressed as Fe₂O₃) concentration, FeO (expressed as Fe₂O₃)/ T-Fe₂O₃ rate, CoO concentration, Se concentration, NiO concentration, CeO₂ concentration, and TiO₂ concentration. The numerals in Tables are indicated as a percentage of the weight except that CoO concentration, Se concentration, and NiO concentration are expressed in ppm. Tables 1 and 2 also show the optical properties of the respective samples.

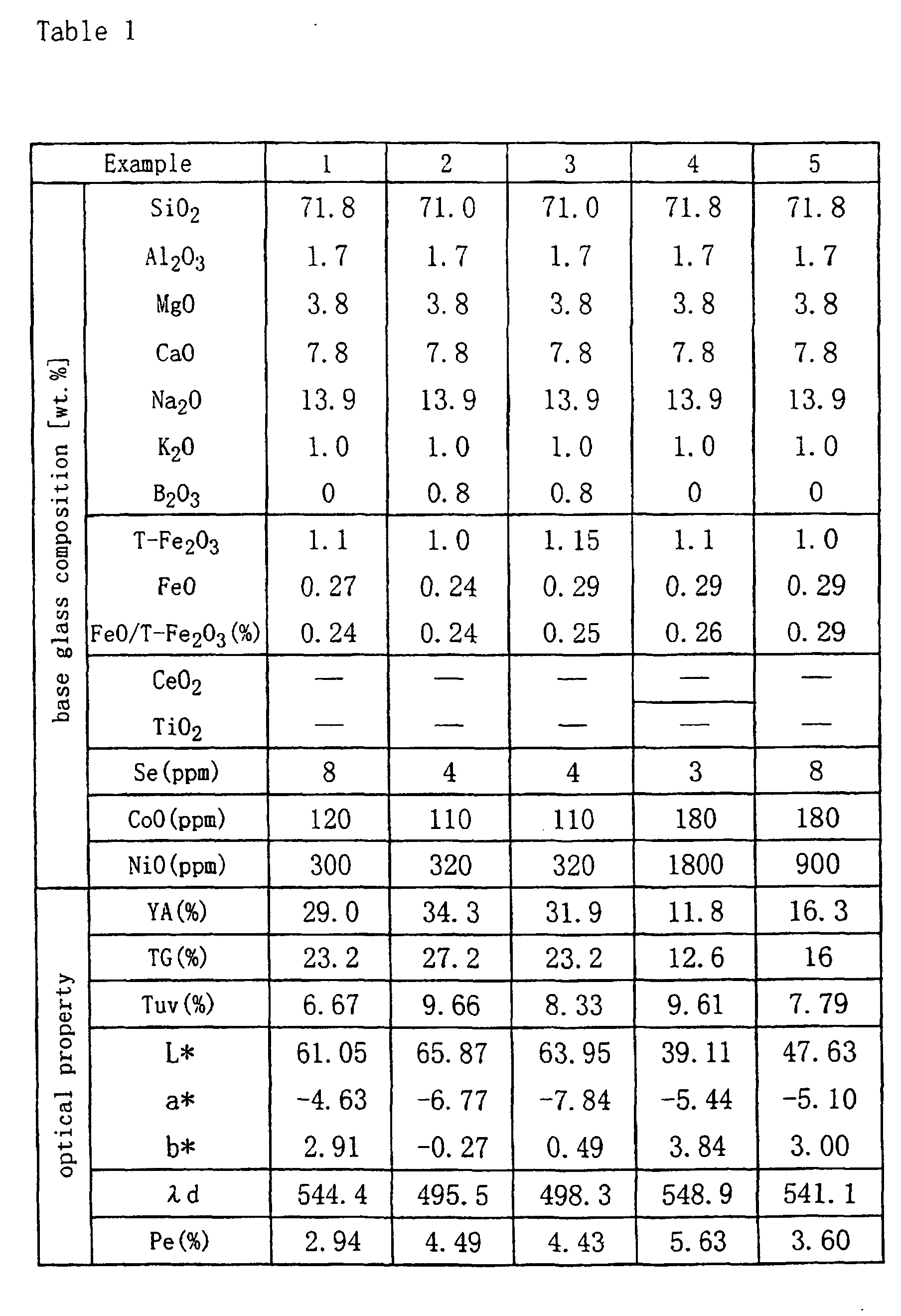

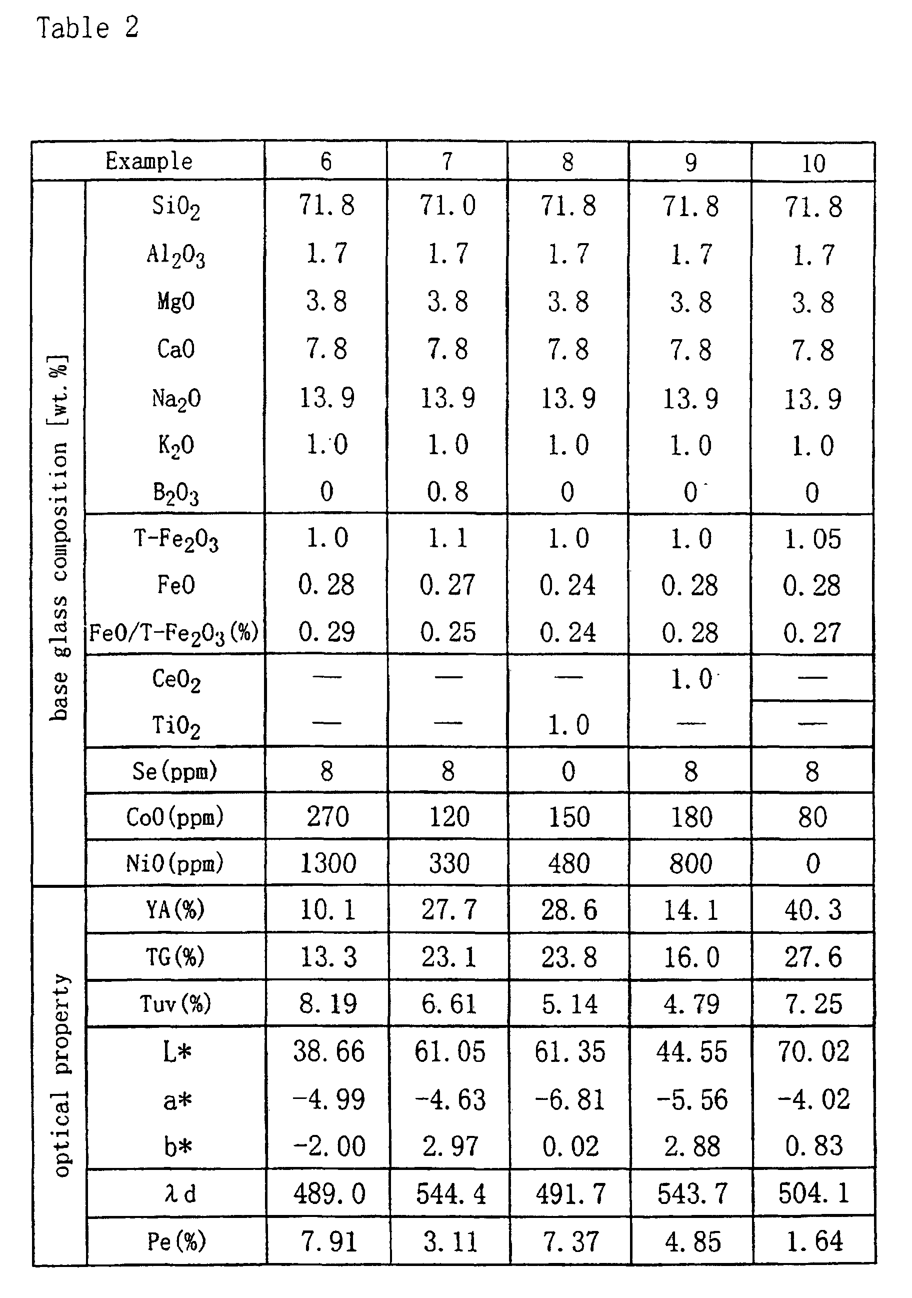

Table 1 and 2 show that all glasses having a thickness of 4 mm of Examples 1 through 9 have the visible light transmittance (YA) between 10% and 50%, the solar energy transmittance (TG) of not greater than 30%, and the ultraviolet transmittance (Tuv) of not greater than 12%. Each of the glasses has the FeO/T-Fe₂O₃ ratio in a range from 0.15 to 0.4.

These samples have the chromaticity expressed by a* and b* in ranges of -8≦a*-2 and -2≦b*≦4 , the dominant wavelength (λd) measured by using the illuminant "C" between 480 and 580 nanometers, and excitation purity (Pe) of less than 9%.

Examples 1,2 and 4-10 are within the scope of claim 2 defining the preferable range. The glasses of the Example 1,2 and 4-10 have large values of a* and have the preferable grayish green shade.

Examples 1-5 and 7-10 are within the scope of claim 3 defining the preferable range. A small amount of CoO in relative does not reduce the visible light transmittance of these samples or does not make these glasses too blue tint.

Examples 1-7,9 and 10 comprising Se are within the scope of claim 4 defining the preferable range. These samples have large values of a* and have the preferable color shade due to Se. Among them, Example 2-4 are within the scope of claim 5, and obtain the preferable grayish shade with a smaller amount of Se.

Example 8 is within the scope of claim 6. The glass includes NiO to provide the desired properties without Se.

Examples 1-9 are within the scope of claim 7. The desired color shade can be obtained with NiO and with a significantly smaller amount of Se than the amount conventionally required or without Se. Among these samples, Examples 1-3,7 and 8 are within the scope of claim 8 defining the preferable range and have the middle visible light transmittance. On the other hand, Examples 4-6 and 9 are within the scope of claim 9 also defining the preferable range and have the low visible light transmittance.

Example 10 is within the scope of claim 10. This sample includes Se to provide the desired properties without NiO.

Examples 8,9 are within the scope of claim 11. These samples farther comprises CeO₂ and/or TiO₂ to improve the ultraviolet transmittance.

Therefore, when the glass compositions of the examples mentioned above are used for windshields of vehicles and windows of buildings, good effects of preventing degradation of interior materials and of privacy protecting can be obtained.

### Comparative Examples 1-5

Table 3 shows glass components and optical properties of Comparative Examples which are made in the same manner as Examples 1-10 but the glass components are different.

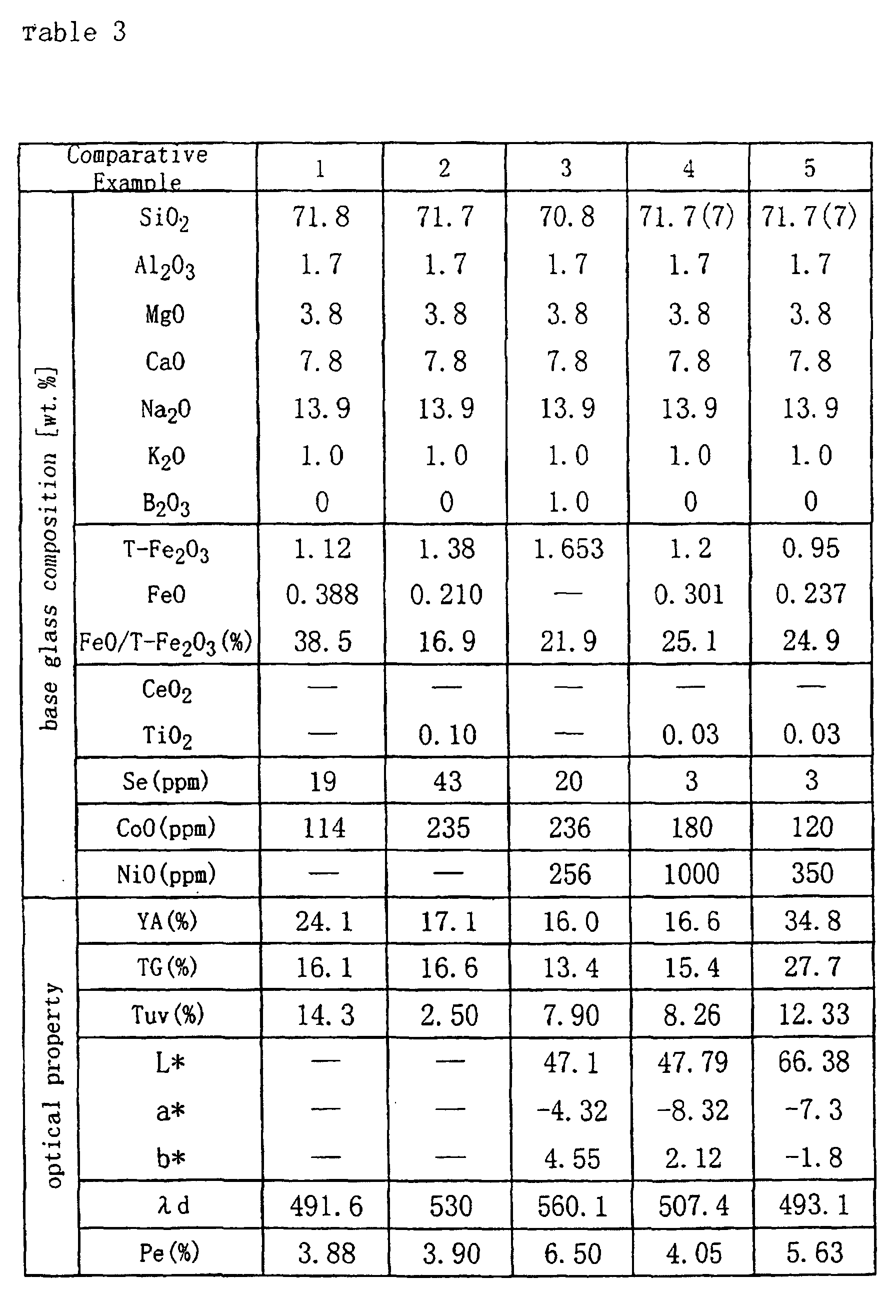

All of Comparative Examples 1-5 have compositions out of the range of the present invention. Comparative Example 1 has the same composition as the example of Japanese Patent H7-29813B, which shows the glass produced by the vacuum refining process, as referred in the prior art description. Comparative Example 2 has the same composition as the example of Japanese Patent H8-157232A as referred above. Comparative Example 3 has the same composition as the example of PCT (Japanese phase) H7-508971 as referred above.

It should be noted that the optical properties of Comparative Example 1 are indicated in values converted based on a glass thickness of 3.9 mm and the optical properties of Comparative Example 2 are indicated in values converted based on a glass thickness of 5 mm.

Comparative Examples 4 and 5 contains T-Fe₂O₃ an amount of which is out of the claimed range.

As detailed above, according to the present invention, an ultraviolet/infrared absorbent low transmittance glass, which exhibits low visible light transmittance, low solar energy transmittance, and low ultraviolet transmittance and which has grayish green shade can be provided.

The ultraviolet/infrared absorbent low transmittance glass having the greenish gray shade can exhibit the effect of preventing degradation and discoloration of interior materials and the privacy protecting effect when the glass is used for a rear window glass of a vehicle, a window of a building, or the like.

## Claims

1. An ultraviolet/infrared absorbent low transmittance glass consisting of base glass comprising:
65 to 80 wt. % SiO₂;
0 to 5 wt. % Al₂O₃;
0 to 10 wt. % MgO;
5 to 15 wt. % CaO wherein a total amount of MgO and CaO is between 5 and 15 wt. %;
10 to 18 wt. % Na₂O;
0 to 5 wt. % K₂O wherein a total amount of Na₂O and K₂O is between 10 and 20 wt. %; and
0 to 5 wt. % B₂O₃,
and colorants comprising:
more than 0.95 wt. % and less than 1.2 wt. % total iron oxide (T-Fe₂O₃) expressed as Fe₂O₃;
0.001 to 0.03 wt. % CoO;
equal to or more than 0.0001 wt.% and less than 0.0008 wt.% Se; and 0.003 to 0.2 wt.% NiO.

2. An ultraviolet/infrared absorbent low transmittance glass as claimed in claim 1, wherein T-Fe₂O₃ is greater than 0.95 wt. % and not greater than 1.1 wt. %.

3. An ultraviolet/infrared absorbent low transmittance glass as claimed in claim 1, wherein CoO is between 0.001 wt. % and 0.018 wt. %.

4. An ultraviolet/infrared absorbent low transmittance glass as claimed in claim 1, wherein Se is between 0.0001 wt. % and 0.0004 wt. %.

5. An ultraviolet/infrared absorbent low transmittance glass as claimed in claim 1, wherein NiO is equal to or more than 0.003 wt. % and less than 0.05 wt. %.

6. An ultraviolet/infrared absorbent low transmittance glass as claimed in claim 1, wherein NiO is between 0.05 wt. % and 0.2 wt. %.

7. An ultraviolet/infrared absorbent low transmittance glass as claimed in claim 1, wherein said colorant further comprises CeO₂ of no greater than 2 wt. % and/or TiO₂ of no greater than 2 wt. %.

8. An ultraviolet/infrared absorbent low transmittance glass as claimed in claim 1, wherein FeO expressed as Fe₂O₃ is between 15 wt. % and 40 wt. % of T-Fe₂O₃.

9. An ultraviolet/infrared absorbent low transmittance glass as claimed in claim 1, wherein the glass with a thickness between 2mm and 5mm has a visible light transmittance (YA) by the C.I.E. illuminant "A" in a range from 10% to 50%, a solar energy transmittance of not greater than 30%, and an ultraviolet transmittance of not greater than 12% specified by ISO.

10. An ultraviolet/infrared absorbent low transmittance glass as claimed in claim 1, wherein the glass has a color defined by the following C.I.E.L.A.B. coordinates -8≦a*≦-2 and -2≦b*≦4, and a grayish green shade.

11. An ultraviolet/infrared absorbent low transmittance glass as claimed in claim 1, wherein the glass is reinforced by air blast cooling.

## Patentansprüche

1. Ultraviolett-Infrarot-absorbierendes Glas mit niedriger Durchlässigkeit, das aus Grundglas besteht, welches umfasst:
65 bis 80 Gew.-% SiO₂;
0 bis 5 Gew.-% Al₂O₃;
0 bis 10 Gew.-% MgO;
5 bis 15 Gew.-% CaO, worin die Gesamtmenge von MgO und CaO zwischen 5 und 15 Gew.-% liegt;
10 bis 18 Gew.-% Na₂O;
0 bis 5 Gew.-% K₂O, worin die Gesamtmenge von Na₂O und K₂O zwischen 10 und 20 Gew.-% liegt; und
0 bis 5 Gew.-% B₂O₃,
und Farbstoffe, umfassend:
mehr als 0,95 Gew.-% und weniger als 1,2 Gew.-% Gesamteisenoxid (T-Fe₂O₃) ausgedrückt als Fe₂O₃;
0,001 bis 0,03 Gew.-% CoO;
entsprechend oder mehr als 0,0001 Gew.-% und weniger als 0,0008 Gew.-% Se; und
0,003 bis 0,2 Gew.-% NiO.

2. Ultraviolett-Infrarot-absorbierendes Glas mit niedriger Durchlässigkeit nach Anspruch 1, worin T-Fe₂O₃ größer als 0,95 Gew.-% und nicht größer als 1,1 Gew.-% ist.

3. Ultraviolett-Infrarot-absorbierendes Glas mit niedriger Durchlässigkeit nach Anspruch 1, worin CoO zwischen 0,001 Gew.-% und 0,018 Gew.-% liegt.

4. Ultraviolett-Infrarot-absorbierendes Glas mit niedriger Durchlässigkeit nach Anspruch 1, worin Se zwischen 0,0001 Gew.-% und 0,0004 Gew.-% liegt.

5. Ultraviolett-Infrarot-absorbierendes Glas mit niedriger Durchlässigkeit nach Anspruch 1, worin NiO gleich oder mehr als 0,003 Gew.-% und weniger als 0,05 Gew.-% ist.

6. Ultraviolett-Infrarot-absorbierendes Glas mit niedriger Durchlässigkeit nach Anspruch 1, worin NiO zwischen 0,05 Gew.-% und 0,2 Gew.-% liegt.

7. Ultraviolett-Infrarot-absorbierendes Glas mit niedriger Durchlässigkeit nach Anspruch 1, worin der Farbstoff weiterhin CeO₂ von nicht mehr als 2 Gew.-% und/oder TiO₂ von nicht mehr als 2 Gew.-% umfasst.

8. Ultraviolett-Infrarot-absorbierendes Glas mit niedriger Durchlässigkeit nach Anspruch 1, worin FeO ausgedrückt als Fe₂O₃ zwischen 15 Gew.-% und 40 Gew.-% von T-Fe₂O₃ liegt.

9. Ultraviolett-Infrarot-absorbierendes Glas mit niedriger Durchlässigkeit nach Anspruch 1, worin das Glas mit einer Dicke zwischen 2 mm und 5 mm eine Durchlässigkeit gegenüber sichtbarem Licht (YA) gemäß C.I.E. Leuchtstoff "A" in einem Bereich von 10% bis 50%, eine Durchlässigkeit gegenüber Solarenergie von nicht größer als 30% und eine UV-Durchlässigkeit gemäß ISO von nicht mehr als 12% aufweist.

10. Ultraviolett-Infrarot-absorbierendes Glas mit niedriger Durchlässigkeit nach Anspruch 1, worin das Glas eine Farbe, die durch die folgenden C.I.E.L.A.B.-Koordinaten -8≤a*≤-2 und - 2≤b*≤4 definiert ist, und eine graugrüne Farbtönung aufweist.

11. Ultraviolett-Infrarot-absorbierendes Glas mit niedriger Durchlässigkeit nach Anspruch 1, worin das Glas durch Gebläseluftkühlung verstärkt worden ist.

## Revendications

1. Verre à faible transmission absorbant les rayonnements ultraviolets et infrarouges, constitué d'un verre de base comprenant :
65 à 80 % en poids de SiO₂ ;
0 à 5 % en poids de Al₂O₃ ;
0 à 10 % en poids de MgO ;
5 à 15 % en poids de CaO dans lequel une quantité totale de MgO et de CaO est située entre 5 et 15 % en poids ;
10 à 18 % en poids de Na₂O ;
0 à 5 % en poids de K₂O dans lequel une quantité totale de Na₂O et de K₂O est située entre 10 et 20 % en poids ; et
0 à 5 % en poids de B₂O₃,
et des colorants comprenant :
plus de 0,95 % en poids et moins de 1,2 % en poids d'oxyde de fer total (T- Fe₂O₃) exprimé sous forme de Fe₂O₃ ;
0,001 à 0,03 % en poids de CoO ;
un montant égal ou supérieur à 0,0001 % en poids et inférieur à 0,0008 % en poids de Se ; et
0,003 à 0,2 % en poids de NiO.

2. Verre à faible transmission absorbant les rayonnements ultraviolets et infrarouges, selon la revendication 1, dans lequel T- Fe₂O₃ est supérieur à 0,95 % en poids et inférieur à 1,1 % en poids.

3. Verre à faible transmission absorbant les rayonnements ultraviolets et infrarouges, selon la revendication 1, dans lequel CoO est situé entre 0,001 % en poids et 0,0018 % en poids.

4. Verre à faible transmission absorbant les rayonnements ultraviolets et infrarouges, selon la revendication 1, dans lequel Se est situé entre 0,0001 % en poids et 0,0004 % en poids.

5. Verre à faible transmission absorbant les rayonnements ultraviolets et infrarouges, selon la revendication 1, dans lequel NiO est égal ou supérieur à 0,003 % en poids et inférieur à 0,005 % en poids.

6. Verre à faible transmission absorbant les rayonnements ultraviolets et infrarouges, selon la revendication 1, dans lequel NiO est situé entre 0,05 % en poids et 0,2 % en poids.

7. Verre à faible transmission absorbant les rayonnements ultraviolets et infrarouges, selon la revendication 1, dans lequel ledit colorant comprend en outre pas plus de 2 % en poids de CeO₂ et/ou pas plus de 2 % en poids de TiO₂.

8. Verre à faible transmission absorbant les rayonnements ultraviolets et infrarouges, selon la revendication 1, dans lequel FeO, exprimé sous forme de Fe₂O₃, est situé entre 15 % en poids et 40 % en poids de T-Fe₂O₃.

9. Verre à faible transmission absorbant les rayonnements ultraviolets et infrarouges, selon la revendication 1, dans lequel le verre ayant une épaisseur de 2 mm à 5 mm possède une transmission de la lumière visible (YA) par l'illuminant "A" C.I.E. dans la plage allant de 10 % à 50 %, une transmission de l'énergie solaire qui n'est pas supérieure à 30 % et une transmission de la lumière ultraviolette qui n'est pas supérieure au taux de 12 % spécifié par ISO.

10. Verre à faible transmission absorbant les rayonnements ultraviolets et infrarouges, selon la revendication 1, dans lequel le verre possède une couleur définie par les cordonnées C.I.E.L.A.B. suivantes -8 ≦ a* ≦ -2 et -2 ≦ b* ≦ 4 et une ombre vert grisâtre.

11. Verre à faible transmission absorbant les rayonnements ultraviolets et infrarouges, selon la revendication 1, dans lequel le verre est renforcé par refroidissement à l'air soufflé.
